# FASCICULE DE BREVET EUROPEEN

(11) **EP 2 097 480 B1**
(45) Date de publication et mention de la délivrance du brevet: **11.08.2010**
(21) Numéro de dépôt: 07858734.2
(22) Date de dépôt: 26.11.2007
(51) Int. Cl.: C08L 33/14

(54) **MEMOIRE OPTIQUE 3D COMPRENANT DES PARTICULES MULTICOUCHES COMPRENANT UN MONOMERE PHOTOACTIF PORTEUR D'UN GROUPEMENT PHOTOISOMERISABLE**
OPTISCHER 3D-SPEICHER MIT MEHRSCHICHTIGEN PARTIKELN MIT FOTOAKTIVEM MONOMER MIT FOTOISOMERISIERBARER GRUPPE
OPTICAL 3D MEMORY COMPRISING MULTILAYER PARTICLES THAT COMPRISE A PHOTOACTIVE MONOMER BEARING A PHOTOISOMERIZABLE GROUP

(30) Priorité: 28.11.2006 FR 0655149
(43) Date de publication de la demande: 09.09.2009
(73) Titulaire: ARKEMA FRANCE, 92700 Colombes (FR)
(72) Inventeur: LE CROM, Christophe, 64110 Jurancon (FR); LEIBLER, Ludwik, 75006 Paris (FR)
(74) Mandataire: Lhoste, Catherine
(86) Numéro de dépôt international: PCT/FR2007/052394
(87) Numéro de publication internationale: WO 2008/065299

(56) Documents cités:
- WO-A-2006/075327
- FR-A- 2 830 776
- GB-A- 2 407 501

## Description

### [Domaine technique]

Le développement considérable des systèmes d'informations numériques a entraîné un besoin grandissant de disposer d'unités de stockage de données de grande capacité, compactes et qui assurent la préservation des données pendant une longue durée pouvant excéder 50 années. Le stockage optique est l'une des technologies qui est disponible pour stocker les données (voir à ce propos, SPIE « Conference on nano- and micro-optics for information systems » August 4, 2003, paper 5225-16).

La technologie qui est envisagée dans la présente invention est plus particulièrement celle du stockage optique en 3 dimensions (3D), telle qu'elle est décrite dans les demandes internationales WO 01/73779 et WO 03/070689 ainsi que dans Japanese Journal of Applied Physics, Vol. 45, N°28, 2006, pp. 1229-1234. Elle repose sur l'utilisation d'un chromophore photo-isomérisable qui se présente sous deux formes isomères thermodynamiquement stables, interconvertibles sous l'effet d'une irradiation lumineuse de longueur d'onde appropriée. Lorsque aucune donnée n'a été encore enregistrée, l'une des deux formes est majoritaire. Pour l'écriture de données, on provoque la conversion de cette forme isomère à l'autre par irradiation lumineuse ayant une longueur d'onde appropriée. La conversion peut résulter d'une interaction optique directe ou indirecte (par ex. multiphotonique).

La présente invention est relative à des particules multicouches permettant de faire du stockage optique de données en 3D. Elle est relative aussi à l'unité de stockage optique de données, notamment sous forme de disque, qui comprend les particules multicouches.

### [Problème technique]

Dans la demande WO 03/070689, les chromophores sont rattachés à un polymère grâce à la (co)polymérisation de monomères porteurs desdits chromophores. La demande WO 2006/075327 enseigne par ailleurs l'intérêt à augmenter la concentration en chromophores de façon à améliorer la sensibilité d'enregistrement de la mémoire optique. Cependant, lorsque la concentration en monomères porteurs des chromophores augmente, les propriétés mécaniques du polymère sont affectées et le matériau obtenu est soit trop fragile soit trop mou pour pouvoir être manipulable facilement. Le besoin existe donc de mettre au point un matériau rigide utilisable dans le domaine du stockage optique 3D présentant une bonne aptitude à la lecture et à l'écriture des données.

La Demanderesse a constaté qu'un matériau constitué de particules multicouches telles que définies à la revendication 1 ou d'un mélange tel que défini à la revendication 27 permet de résoudre les problèmes posés.

### [Art antérieur]

Le brevet américain US 5023859 décrit une mémoire optique basée sur l'utilisation d'un polymère porteur d'un groupe photosensible du type stilbène, spiropyrane, azobenzène, bisazobenzène, trisazobenzène ou azoxybenzène. Le polymère peut être un polymère à blocs mais il n'est rien précisé de plus sur la nature exacte de ce polymère à blocs.

La demande internationale WO 01/73779 décrit une unité de stockage optique dans laquelle l'information est stockée grâce à la transition cis-/trans d'une molécule (chromophore) ayant une double liaison C=C. La molécule peut être notamment un diarylalkylène de formule Ar₁R₁C=CR₂Ar₂ qui peut être lié à un polymère.

La demande internationale WO 03/070689 décrit un polymère porteur d'un chromophore de type diarylalkylène. Le polymère peut être un poly(alkylacrylate) ou un copolymère du poly(alkylacrylate) notamment un copolymère avec le styrène. Il peut s'agir aussi de polyméthacrylate de méthyle. Il n'est pas précisé qu'il puisse s'agir d'une particule coeur-écorce.

La demande internationale WO 2006/075328 décrit des composés de type diarylalkylène pouvant servir dans le stockage optique.

La demande internationale WO 2006/075327 décrit des polymères ayant des chromophores de type diarylalkylène. Il est fait mention d'un effet coopératif (« cooperative effect ») lorsque la concentration en chromophores augmente. Selon l'une des formes, le polymère se présente sous forme de nanoparticules composées d'un copolymère réticulé de MMA et d'eMMA dispersées dans du PMMA, mais il ne s'agit pas de particules coeur-écorce.

La demande internationale WO 2006/075328 décrit des composés de type diarylalkylène pouvant servir dans le stockage optique.

La demande internationale WO 2006/075329 décrit une mémoire 3D sous forme de disque.

### [Brève description de l'invention]

L'invention est relative à une particule multicouche de type coeur-écorce comprenant au moins une couche B comprenant au moins un monomère photoactif porteur d'un chromophore photo-isomérisable et une écorce rigide A, le monomère photoactif présentant la formule (I) particulière.

L'invention est aussi relative au mélange comprenant les particules multicouches et un polymère qui est un thermoplastique, un élastomère thermoplastique ou un thermodurcissable ainsi qu'à une mémoire optique 3D comprenant les particules multicouches. On peut utiliser la particule multicouche de l'invention ou le mélange de particules et de polymère thermoplastique, pour réaliser du stockage optique de données.

### [Description détaillée]

T_{g} désigne la température de transition vitreuse d'un polymère mesurée par DSC selon ASTM E1356. On parle aussi de la T_{g} d'un monomère pour désigner la T_{g} de l'homopolymère ayant une masse moléculaire moyenne en nombre Mₙ d'au moins 10000 g/mol, obtenu par polymérisation radicalaire dudit monomère. Ainsi, on dira que l'acrylate d'éthyle a une T_{g} de - 24°C car l'homopolyacrylate d'éthyle a une T_{g} de -24°C. Tous les pourcentages sont donnés en poids, sauf mention contraire.

**On entend par monomère photoactif**, un monomère porteur d'un groupement chromophore CR photoisomérisable. Le chromophore existe sous deux formes isomères, par exemple *cis*/*trans*. La conversion d'une forme à l'autre s'effectue sous l'action d'une irradiation lumineuse de longueur d'onde appropriée.

Selon l'invention, le monomère photoactif présente la formule (I): 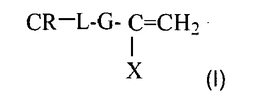 dans laquelle :
- X désigne H ou CH₃- ;
- G désigne -O-C(=O)-, -C(=O)-O-, un groupement phényle, substitué ou non, ou bien -NR-C(=O)-, NR étant relié à L et R étant H ou un groupement alkyle en C₁-C₁₀ ;
- L désigne un groupement espaceur ;
- CR désigne un chromophore photoisomérisable.

Le groupement espaceur L a pour fonction d'éloigner le chromophore de la chaîne du copolymère de façon à favoriser l'interconversion du chromophore. Ceci améliore la capacité et la vitesse de lecture. De préférence, L est choisi de telle sorte que G et CR soient reliés entre eux par un enchaînement de 2 atomes ou plus lesquels sont liés entre eux par des liaisons covalentes. L peut être choisi par exemple parmi les groupements (CR₁R₂)ₘ. O(CR₁R₂)ₘ, (OCR₁R₂)ₘ dans lequel m est un entier supérieur à 2, de préférence compris entre 2 et 10, R₁ et R₂ désignent indépendamment H, halogène ou des groupements alkyle ou aryle. De préférence, R₁ et R₂ désignent H.

Le chromophore CR est de préférence du type diarylalkylène existant sous les formes isomères cis et *trans*. Il peut s'agir d'un des chromophores divulgués dans les demandes WO 01/73779**,** WO 03/070689**,** WO 2006/075329 ou WO 2006/075327. De préférence, on choisit le chromophore CR de sorte que la barrière d'énergie pour l'isomérisation soit supérieure à 80 kJ/mol. En effet, il est souhaitable que l'isomérisation soit un processus très lent à la température ambiante pour éviter une perte des données enregistrées.

De préférence, le monomère photoactif a pour formule (II) : 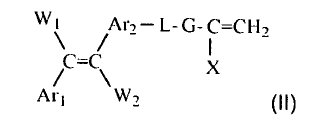 dans laquelle :
- Ar₁ et Ar₂ désignent des groupements aryles, éventuellement substitués ;
- W₁ et W₂ sont choisis parmi les groupements -CN, -COOH, -COOR', -OH, -SO₂R', - NO₂, R' étant un groupement alkyle linéaire ou ramifié ou aryle en C₁-C₁₀.

Le chromophore correspond au groupement Ar₁W₁C=CW₂Ar₂. L est relié par liaisons covalentes à Ar₂ ainsi qu'à G. Ar₁ et Ar₂ désignent des groupements aryles, substitués ou non. Ils sont choisis par exemple indépendamment l'un de l'autre parmi les groupements phényle, anthracène ou phénanthrène. Les substituant(s) éventuels sont choisi(s) parmi : H, alkyle linéaire ou ramifié en C₁-C₁₀, NO₂ halogène ou alcoxy en C₁-C₁₀, NR"R"' avec R" et R"' étant H ou un alkyle linéaire ou ramifié en C₁-C₁₀. Ar₁ est rattaché à la double liaison C=C du chromophore. Ar₂ est rattaché à la double liaison C=C du chromophore ainsi qu'au groupement L.

De préférence, G est -O-C(=O)- ou le groupement phényle C₆H₄, c'est-à-dire que le monomère a pour formule : 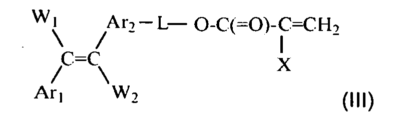 ou

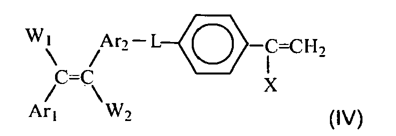

De préférence, Ar₁ est un groupe phényle et Ar₂ est un groupe phényle ou biphényle, chacun des groupes phényle et/ou biphényle pouvant être éventuellement substitué, c'est-à-dire que le chromophore a pour formule (V) ou (VI) :

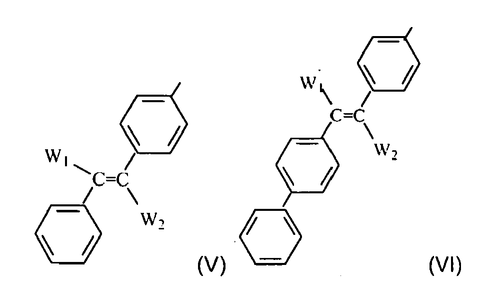

Les substituants éventuels peuvent être par exemple H, aryle, alkyle linéaire ou ramifié en C₁-C₁₀, NO₂ halogène ou alcoxy linéaire ou ramifié en C₁-C₁₀.

Selon une forme préférée, W₁ et W₂ désignent CN, Ar₂ est un groupe phényle, Ar₁ est un groupe phényle substitué en para par R₅O-. R₅ désigne un groupement alkyle ou aryle, substitué ou non. De préférence, R₅ est un groupement alkyle linéaire ou ramifié en C₁-C₄. R₅ peut être par exemple un groupement méthyle, éthyle, propyle, butyle. Par exemple, il pourra s'agir du chromophore de formule (VII) :

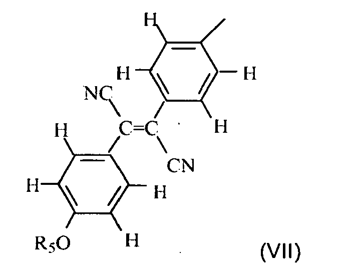

Selon une autre forme préférée, W₁ et W₂ désignent CN, Ar₂ est un groupe phényle, Ar₁ est un groupe biphényle substitué en para par R₅O-. Par exemple, il pourra s'agir du chromophore de formule (VIII) :

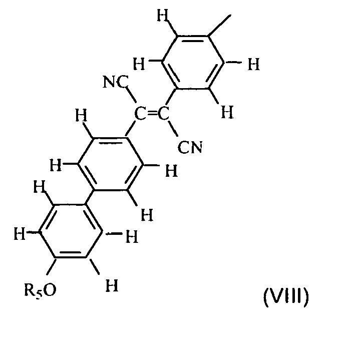

Les deux monomères suivants notés eAA ou eMMA sont tout particulièrement préférés :

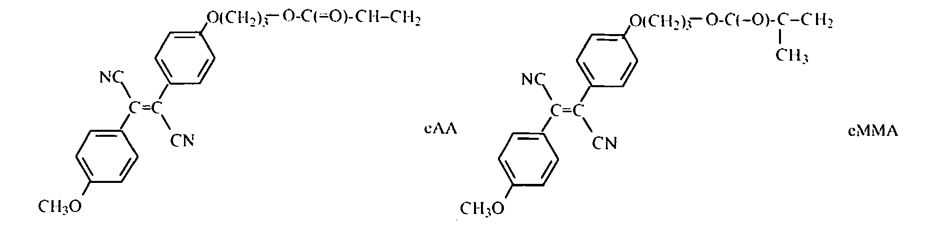

En effet, ils présentent de bonnes caractéristiques optiques pour l'écriture et la lecture (voir à ce propos, Japan Journal of Applied Physics Vol.45, N°28, 2006, pp.1229-1234) :
- l'isomère *trans* présente une plus grande fluorescence que le *cis* ;
- l'isomère *trans* présente une large section efficace d'absorption biphotonique ;
- le déplacement de Stokes est supérieur à 100 nm (peu de recouvrement entre le spectre d'absorption et celui d'émission avec des pics respectivement vers 375 et 485 nm).
Ils sont de plus facilement copolymérisables avec une large gamme de monomères, en particulier par la technique de polymérisation radicalaire contrôlée. Enfin, ils présentent une grande stabilité car la barrière d'énergie d'isomérisation est supérieure à 80 kJ/mol.

On préfère les chromophores qui présentent un faible recouvrement, c'est-à-dire < 35%, voire mieux <20%, entre les spectres d'absorption et d'émission (voir à ce propos page 22 de WO 2006/075327). Ceci permet d'augmenter la concentration du chromophore donc de favoriser l'effet coopératif sans nuire à la qualité du signal lors de la lecture. Le recouvrement dépend à la fois du déplacement de Stokes et de la largeur du pic. Le recouvrement est défini comme étant le pourcentage d'émission absorbé pour une solution du chromophore à 0,01 M dans une cuve de 1 cm de passage optique. De préférence, le déplacement de Stokes est > 100 nm..

L'invention n'est pas limitée aux chromophores particuliers de type diarylalkylène mais peut s'appliquer aussi à d'autres chromophores photoisomérisables, comportant pas exemple des groupements stilbène, spiropyrane, azobenzène, bisazobenzène, trisazobenzène ou azoxybenzène. On trouvera une liste de ces chromophores dans les documents suivants US 5023859**,** US 6875833 et US 6641889**.**

**On entend par monomère à effet coopératif**, un composé de formule (IX) : 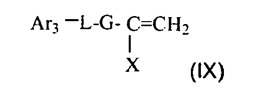 dans laquelle :
- X, G et L ont les mêmes significations que pour le monomère photoactif ;
- Ar₃ désigne un groupe aromatique substitué par au moins un substituant à effet inducteur (-I).

Ce monomère interagit par un effet coopératif avec le chromophore et/ou améliore l'effet coopératif entre les chromophores eux-mêmes, ce qui améliore la vitesse d'écriture. Une interprétation de l'effet coopératif est que le monomère modifie le micro-environnement du chromophore et favorise la photo-isomérisation.

Le substituant à effet inducteur (-I) est choisi parmi :
(i) les halogènes ;
(ii) -COOY, -CONYY', -OY, -SY ou -C(=O)Y, Y et Y' désignant un groupe H ou alkyle linéaire ou ramifié en C₁-C_{10.}

Avantageusement, Ar₃ est un groupe phényle. Avantageusement, le groupe halogène est le chlore. Encore plus avantageusement, Ar₃ est choisi parmi les groupes suivants :

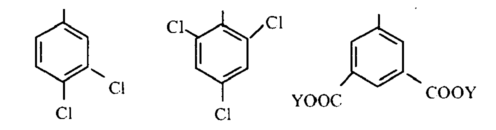

A titre d'exemples, on pourra utiliser les monomères encombrés suivants :

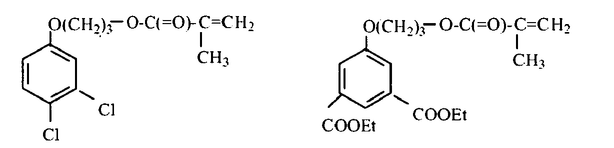

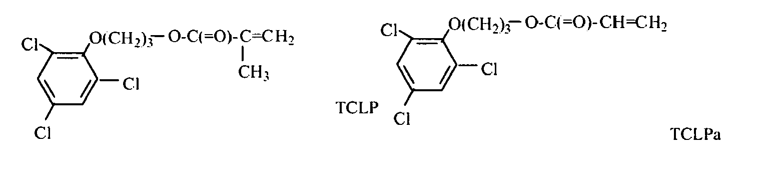

TCLP et TCLPa désignent respectivement le méthacrylate et l'acrylate de 2,4,6-trichlorophénoxypropyle.

**S'agissant de l'écorce rigide A**, celle-ci est composée d'un polymère ayant une T_{g} > 0°C, avantageusement > 60°C, de préférence > 80°C.

L'écorce rigide est obtenue à partir de la polymérisation d'au moins un monomère vinylique, vinylidénique, diénique, oléfinique, allylique ou (méth)acrylique. Ce monomère est choisi plus particulièrement parmi les monomères vinylaromatiques tels que le styrène ou les styrènes substitués notamment l'alpha-méthylstyrène, les monomères acryliques tels que l'acide acrylique ou ses sels, les acrylates d'alkyle, de cycloalkyle ou d'aryle tels que l'acrylate de méthyle, d'éthyle, de butyle, d'éthylhexyle ou de phényle, les acrylates d'hydroxyalkyle tels que l'acrylate de 2-hydroxyéthyle, les acrylates d'étheralkyle tels que l'acrylate de 2-méthoxyéthyle, les acrylates d'alcoxy- ou aryloxy-polyalkylèneglycol tels que les acrylates de méthoxypolyéthylèneglycol, les acrylates d'éthoxypolyéthylèneglycol, les acrylates de méthoxypolypropylèneglycol, les acrylates de méthoxy-polyéthylèneglycol-polypropylèneglycol ou leurs mélanges, les acrylates d'aminoalkyle tels que l'acrylate de 2-(diméthylamino)éthyle (ADAME), les acrylates fluorés, les acrylates silylés, les acrylates phosphorés tels que les acrylates de phosphate d'alkylèneglycol, les monomères méthacryliques comme l'acide méthacrylique ou ses sels, les méthacrylates d'alkyle, de cycloalkyle, d'alcényle ou d'aryle tels que le méthacrylate de méthyle (MAM), de lauryle, de cyclohexyle, d'allyle de phényle ou de naphtyle, les méthacrylates d'hydroxyalkyle tels que le méthacrylate de 2-hydroxyéthyle ou le méthacrylate de 2-hydroxypropyle, les méthacrylates d'étheralkyle tels que le méthacrylate de 2-éthoxyéthyle, les méthacrylates d'alcoxy- ou aryloxy-polyalkylèneglycol tels que les méthacrylates de méthoxypolyéthylèneglycol, les méthacrylates d'éthoxypolyéthylèneglycol, les méthacrylates de méthoxypolypropylèneglycol, les méthacrylates de méthoxy-polyethylèneglycol-polypropylèneglycol ou leurs mélanges, les méthacrylates d'aminoalkyle tels que le méthacrylate de 2-(diméthylamino)éthyle (MADAME), les méthacrylates fluorés tels que le méthacrylate de 2,2,2-trifluoroéthyle, les méthacrylates silylés tels que le 3-méthacryloylpropyltriméthylsilane, les méthacrylates phosphorés tels que les méthacrylates de phosphate d'alkylèneglycol, le méthacrylate d'hydroxy-éthylimidazolidone, le méthacrylate d'hydroxy-éthylimidazolidinone, le méthacrylate de 2-(2-oxo-1-imidazolidinyl)éthyle, l'acrylonitrile, l'acrylamide ou les acrylamides substitués, la 4-acryloylmorpholine, le N-méthylolacrylamide, le méthacrylamide ou les méthacrylamides substitués, le N-méthylolméthacrylamide, le chlorure de méthacrylamido-propyltriméthyl ammonium (MAPTAC), l'acide itaconique, l'acide maléique ou ses sels, l'anhydride maléique, les maléates ou hémimaléates d'alkyle ou d'alcoxy- ou aryloxy-polyalkylèneglycol, la vinylpyridine, la vinylpyrrolidinone, les (alcoxy) poly(alkylène glycol) vinyl éther ou divinyl éther, tels que le méthoxy poly(éthylène glycol) vinyl éther, le poly(éthylène glycol) divinyl éther, les monomères oléfiniques, parmi lesquels on peut citer l'éthylène, le butène, l'hexène et le 1-octène ainsi que les monomères oléfiniques fluorés, et les monomères vinylidénique, parmi lesquels on peut citer le fluorure de vinylidène, seuls ou en mélange d'au moins deux monomères précités.

L'écorce rigide est obtenue de préférence à partir du styrène et/ou de monomère(s) (méth)acrylique(s). De façon avantageuse, elle comprend comme monomère(s) majoritaire(s) le styrène et/ou le MAM. De façon préférée, elle comprend de 80 à 100% de styrène et/ou de MAM.

**S'agissant de la couche B**, celle-ci comprend au moins un monomère photoactif et éventuellement au moins un autre monomère copolymérisable avec le monomère photoactif. L'autre monomère peut être choisi dans la liste des monomères définie précédemment. Il peut s'agir aussi d'un monomère encombré. La teneur en poids en monomère photoactif dans la couche B peut aller de 5 à 100%.

Selon une forme préférée, le monomère qui est copolymérisé avec le monomère photoactif est un monomère à effet coopératif. Il s'agit de préférence du TCLP ou du TCLPa. La couche B comprend donc en poids de 10 à 80% d'au moins un monomère photoactif, de 10 à 80 % d'au moins un monomère à effet coopératif et éventuellement un monomère de la liste précédente (le total faisant 100%). On peut avantageusement utiliser l'acrylate de butyle ou le méthacrylate de méthyle comme comonomère du monomère photoactif et du monomère à effet coopératif.

**S'agissant de la particule multicouche de l'invention**, il s'agit d'une particule du type coeur-écorce qui comprend au moins une couche B et une écorce rigide A (constituant la couche externe). Une des fonctions de l'écorce rigide A est de rigidifier la particule multicouche et de procurer après transformation une rigidité et une tenue mécanique suffisante au matériau. Une des fonctions de la couche B est de stocker les données. La particule multicouche a typiquement un diamètre moyen allant de 10 à 1000 nm. De plus, le rapport massique couche B / écorce A va de préférence de 90/10 à 10/90.

La particule multicouche est préparée par un procédé en émulsion aqueuse dans lequel chaque couche est préparée par des étapes successives de polymérisation de monomère(s) en présence d'au moins un agent tensioactif et d'au moins un amorceur radicalaire. On pourra se reporter à l'ouvrage suivant pour la description des coeur-écorce : « Les latex synthétiques » de E.Raynaud, Tec&Doc, isbn 2743008202 ainsi qu'à « Emulsion polymerization, theory and practice, D.C. Backley , ISBN 0-85334-627-5 applied science publisher LTD 1975 » pour plus de détails sur l'émulsion. A l'issue du procédé en émulsion, on récupère des particules multicouches sous forme d'une poudre, par exemple par une étape d'atomisation.

La particule multicouche peut comprendre une ou plusieurs autre(s) couche(s) en plus de l'écorce rigide et de la couche B. Par exemple, elle peut comprendre disposées l'une contre l'autre (dans l'ordre de l'intérieur vers l'extérieur de la particule), une couche interne (le coeur), une couche B et une écorce rigide. Elle peut aussi comprendre disposées l'une contre l'autre (dans l'ordre de l'intérieur vers l'extérieur de la particule), une couche interne B (le coeur), une couche intermédiaire, une écorce rigide. La particule multicouche ne comprend de préférence que deux couches, une couche B constituant le coeur de la particule et disposée contre la couche B, une écorce externe rigide.

Chaque couche peut être éventuellement réticulée. La réticulation permet de conserver tout ou partie de la forme initiale de la particule. Pour ce faire, la polymérisation conduisant à la couche réticulée est conduite en présence d'au moins un agent réticulant, c'est-à-dire un composé qui présente au moins deux groupes polymérisables. Il peut s'agir par exemple d'un diacrylate, un triacrylate ou du divinylbenzène. Chaque couche peut aussi éventuellement comprendre un monomère qui facilite l'adhésion de ladite couche avec la ou les autre(s) couche(s) avec laquelle elle est contact. Par exemple, ce monomère peut être un diacrylate ou un monomère allylique.

On peut utiliser les particules multicouches seules ou bien en mélange avec un autre polymère qui présente une transparence suffisante dans le domaine des longueurs d'ondes utilisées pour l'écriture ou la lecture ainsi qu'une faible biréfringence. Il peut s'agir d'un thermoplastique, d'un élastomère thermoplastique ou d'un thermodurcissable. Cette caractéristique est importante pour la technologie de mémoire optique en 3D pour laquelle il est nécessaire que le rayon lumineux atteigne chacune des couches de la mémoire sans être perturbé. On utilise de préférence un thermoplastique tel qu'un homo- ou copolymère du méthacrylate de méthyle (MAM), de styrène ou bien un polycarbonate. Le mélange comprend en poids de 50 à 100%, avantageusement de 75 à 100%, de préférence de 90 à 100%, des particules multicouches pour respectivement de 0 à 50%, avantageusement de 0 à 25%, de préférence 5 à 10% du thermoplastique ou du thermodurcissable. Le mélange est obtenu à l'aide de toutes les techniques de mélange des thermoplastiques que connaît l'homme de métier. Il s'agit de préférence de l'extrusion. Le mélange peut aussi comprendre éventuellement des additifs divers (antistatique, lubrifiant, colorant, plastifiant, antioxydant, anti-UV,...).

### Ecriture/lecture de données

Les principes d'optique qui sous-tendent la présente invention sont les mêmes que ceux décrit dans les demandes internationales WO 01/73779 et WO 03/070689 déjà publiées. L'écriture repose sur la conversion d'une forme isomère à une autre sous l'effet d'une irradiation lumineuse. La conversion nécessite d'avoir un chromophore dans un état excité, ce qui nécessite l'absorption à un niveau d'énergie E. L'absorption de deux photons est facilitée en combinant l'énergie d'au moins deux photons d'un ou de plusieurs faisceau(x) lumineux ayant des niveaux d'énergies E₁ et E₂ qui peuvent être différents de E. Les deux faisceaux lumineux sont dans le domaine de l'UV, du visible ou du proche infrarouge. De préférence, on n'utilise un seul faisceau lumineux et la conversion est le résultat d'un processus d'absorption de deux photons.

La lecture peut reposer sur un processus d'excitation électronique linéaire ou non-linéaire. Les spectres d'émission des deux isomères sont différents et l'émission est collectée à l'aide d'un dispositif de lecture adéquat. Un processus non-linéaire tel que la dispersion Raman ou un processus de mélange à quatre ondes (« four wave mixing process » en Anglais) peuvent être employés.

Un petit élément de volume de la mémoire 3D contient les chromophores sous une forme isomère majoritaire ou bien sous l'autre. L'élément de volume contient donc de l'information stockée dans une zone bien définie et localisée de la mémoire et est caractérisé par un signal optique différent de celui de son environnement immédiat.

### A propos de la mémoire optique 3D

L'invention est aussi relative à la mémoire optique 3D (ou unité de stockage optique en 3D) comprenant les particules multicouches ou le mélange de l'invention et qui est utilisée pour enregistrer (stocker) les données. Une mémoire 3D est une mémoire qui permet de stocker des données en tout point (défini par trois coordonnées x, y et z) du volume de la mémoire. Une mémoire 3D permet un stockage des données en plusieurs couches virtuelles (ou niveaux virtuels). Le volume de la mémoire 3D est donc lié au volume physique occupé par celle-ci.

Celle-ci se présente par exemple sous la forme d'une plaque, carrée ou rectangulaire, d'un cube ou bien d'un disque qui comprend les particules multicouches de l'invention éventuellement sous forme du mélange tel que décrit.

De façon préférée, l'unité de stockage optique est sous la forme d'un disque ce qui permet de le mettre en rotation, la tête d'écriture ou de lecture étant ainsi fixe. Le disque peut être obtenu par moulage des particules multicouches ou du mélange. Il peut aussi être obtenu par dépôt des particules multicouches ou du mélange sur un support rigide et transparent dans le domaine de longueurs d'ondes utilisées pour l'écriture et/ou la lecture.

On peut obtenir la mémoire 3D par la technique d'injection. Cette technique de transformation est connue des plasturgistes et consiste à injecter sous pression la matière à l'état fondu dans un moule (à ce propos, on pourra se reporter à Précis de matières plastiques, Nathan, 4eme édition, isbn 2-12-355352-2, pp. 141-156). La matière est fondue et comprimée à l'aide d'une extrudeuse (lorsque les particules multicouches se présentent sous forme de poudre, il est nécessaire dans une étape préalable de les transformer en granulés par exemple à l'aide d'une opération d'extrusion-granulation). On peut aussi superposer plusieurs couches comprenant le copolymère à blocs ou le mélange de l'invention comme enseigné dans la demande internationale WO 2006/075329**.**

De façon préférée, la mémoire optique 3D est sous forme d'un disque ce qui permet de le mettre en rotation, la tête d'écriture ou de lecture étant sensiblement fixe. Le disque peut être obtenu par injection ou moulage du copolymère à blocs ou du mélange si celui-ci présente les caractéristiques mécaniques adéquates. Il peut aussi être obtenu par dépôt du copolymère à blocs ou du mélange sur un support rigide et transparent dans le domaine de longueurs d'ondes utilisées pour l'écriture et/ou la lecture.

### [Exemples]

### exemple 1 : préparation de particules coeur-écorce

### préparation du coeur :

Dans un réacteur en verre de 500 mL sous agitation, on introduit 100 g d'eau, 0,6 g de sodium lauryl sulfate, 0,075 g de Na₂HPO₄ 6,75 g d'eMMA, 6,75 g de TCLP et 1,5 g d'acrylate de butyle et 0,003 g de méthacrylate d'allyle. On chauffe à 95°C pendant 30 minutes, puis on introduit en continu pendant 3 heures une solution aqueuse de 0,12 g de persulfate de potassium dans 18 g d'eau. On introduit ensuite, 0,015 g de persulfate de potassium et on laisse agiter pendant 1 heure à 95°C.

Le coeur présente les caractéristiques suivantes :
masse moyenne en nombre : 61970 g/mol
masse moyenne en poids : 714950 g/mol
polymolécularité : 11,54

### préparation de l'écorce :

Au mélange précédent sous agitation à 95°C, on ajoute en continu pendant 1 heure 6,43 g de styrène en continu pendant 1 heure et une solution aqueuse de 0,00643 de persulfate de potassium dans 5 g d'eau. On laisse ensuite à 95°C sous agitation pendant 1 heure.

Les particules de coeur-écorce présentent les caractéristiques suivantes :
masse moyenne en nombre : 18650 g/mol
masse moyenne en poids : 182090 g/mol
polymolécularité : 9,77
taille des particules : 60 nm

Ces particules ont ensuite été coagulées à froid (à - 25°C). Le produit obtenu est filtré, lavé et séché. Le produit est ensuite mis en forme par compression-moulage à 150°C pendant 10 min pour former un disque de 2 cm de diamètre et de 2 mm d'épaisseur. La transmission lumineuse est supérieure à 90 % sur toute la gamme du visible.
Ce disque est ensuite soumis à un test statique de lecture-écriture de données à l'aide d'un dispositif laser approprié. On a constaté un enregistrement des données sur le disque.

### Exemples 2 à 3

On a procédé comme pour l'exemple 1 à l'exception du ratio entre le coeur et l'écorce et de la quantité d'agent réticulant introduit dans le coeur. Pour l'exemple 2, le ratio coeur-écorce est de 50/50 et pour l'exemple 3 le coeur a été réticulé avec 1 % de polyéthylène glycol diacrylate de masse moléculaire de 600g. Le disque obtenu pour les exemples 2 et 3 a permis l'enregistrement de données de manière comparable à celui de l'exemple 1.

## Revendications

1. Particule multicouche de type coeur-écorce, comprenant au moins une couche B comprenant au moins un monomère photoactif porteur d'un chromophore photo-isomérisable et une écorce rigide A, le monomère photoactif présentant la formule (I) : 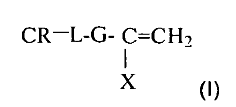 dans laquelle :
• X désigne H ou CH₃- ;
• G désigne -O-C(=O)-, -C(=O)-O-, un groupement phényle, substitué ou non, ou bien -NR-C(=O)-, NR étant relié à L et R étant H ou un groupement alkyle linéaire ou ramifié en C₁-C₁₀ ;
• L désigne un groupement espaceur ;
• CR désigne un chromophore photo-isomérisable.

2. Particule multicouche selon la revendication 1, **caractérisée en ce que** la couche B constituant le coeur de la particule est disposée contre une écorce externe rigide A.

3. Particule multicouche selon la revendication 1ou 2, comprenant en plus de la couche B et de l'écorce rigide A une ou plusieurs autre(s) couche(s).

4. Particule multicouche selon la revendication 1, comprenant disposées l'une contre l'autre (dans l'ordre de l'intérieur vers l'extérieur de la particule) une couche interne B (le coeur), éventuellement une couche intermédiaire et une écorce externe rigide.

5. Particule multicouche selon l'une quelconque des revendications 1 à 4, **caractérisée en ce qu'**au moins l'une des couches est réticulée.

6. Particule multicouche selon l'une quelconque des revendications 1 à 5, **caractérisée en ce que** l'écorce rigide A est composée d'un polymère ayant une T_{g} > 0°C, avantageusement > 60°C, de préférence > 80°C.

7. Particule multicouche selon l'une quelconque des revendications 1 à 6, **caractérisée en ce que** l'écorce rigide A comprend comme monomère(s) majoritaire(s) le styrène et/ou le MAM.

8. Particule multicouche selon la revendication 7, **caractérisée en ce que** l'écorce rigide A comprend de 80 à 100% de styrène et/ou de MAM.

9. Particule multicouche selon l'une quelconque des revendications 1 à 8 **caractérisée en ce que** le rapport massique couche B / écorce A allant de 90/10 à 10/90.

10. Particule multicouche selon l'une des revendications précédentes, **caractérisée en ce que** le groupement espaceur L est choisi de telle sorte que G et CR soit reliés entre eux par un enchaînement de 2 atomes ou plus lesquels sont liés entre eux par des liaisons covalentes.

11. Particule multicouche selon l'une des revendications précédentes, **caractérisée en ce que** L est choisi parmi (CR₁R₂)ₘ, O(CR₁R₂)ₘ, (OCR₁R₂)ₘ dans lequel m est un entier supérieur à 2, de préférence compris entre 2 et 10, R₁ et R₂ désignent indépendamment H, halogène ou des groupements alkyle linéaire ou ramifié ou aryle.

12. Particule multicouche selon l'une des revendications 1 à 11, **caractérisée en ce que** le chromophore CR est du type diarylalkylène.

13. Particule multicouche selon l'une des revendications 1 à 12, **caractérisée en ce que** le chromophore CR présente un recouvrement < 35%, les spectres étant enregistrés sur une solution du chromophore à 0,01 M dans une cuve de 1 cm de passage optique.

14. Particule multicouche selon l'une des revendications 1 à 13, **caractérisée en ce que** le déplacement de Stokes du chromophore CR est supérieur à 100 nm.

15. Particule multicouche selon l'une quelconque des revendications 1 à 14, **caractérisée en ce que** le monomère photoactif a pour formule (II) : 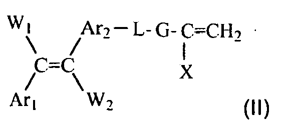 dans laquelle :
• Ar₁ et Ar₂ désignent des groupements aryles, éventuellement substitués ;
• W₁ et W₂ sont choisis parmi les groupements -CN, -COOH, -COOR', -OH, -SO₂R', - NO₂ R' étant un groupement alkyle linéaire ou ramifié ou aryle en C₁-C₁₀.

16. Particule multicouche selon la revendication 15, **caractérisée en ce que** Ar₁ et Ar₂ sont choisis indépendamment l'un de l'autre parmi les groupements phényle, anthracène ou phénanthrène.

17. Particule multicouche selon la revendication 14, **caractérisée en ce que** le monomère photoactif a pour formule (III) ou (IV) : 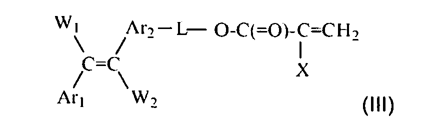 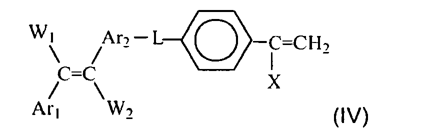 dans lesquelles :
• Ar₁ et Ar₂ désignent des groupements aryles, éventuellement substitués ;
• W₁ et W₂ sont choisis parmi les groupements -CN, -COOH, -COOR', -OH, -SO₂R', - NO₅, R' étant un groupement alkyle linéaire ou ramifié ou aryle en C₁-C₁₀.

18. Particule multicouche selon l'une quelconque des revendications 1 à 17, **caractérisée en ce que** le chromophore est choisi parmi : 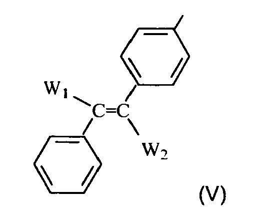 W₁ et W₂ étant choisis parmi les groupements -CN, -COOH, -COOR', -OH, -SO₂R', - NO₂, R' étant un groupement alkyle linéaire ou ramifié ou aryle en C₁-C₁₀ et chacun des deux cycles phényles pouvant être éventuellement substitués.

19. Particule multicouche selon l'une des revendications 15 à 18, **caractérisée en ce que** Ar₁ est un groupe phényle et Ar₂ est un groupe phényle ou biphényle, chacun des groupes phényle et/ou biphényle pouvant être éventuellement substitué.

20. Particule multicouche selon la revendication 19, **caractérisée en ce que** W₁ et W₂ désignent CN, Ar₂ est un groupe phényle, Ar₁ est un groupe phényle ou biphényle substitué en para par R₅O-, R₅ désignant un groupement alkyle linéaire ou ramifié ou aryle, substitué ou non.

21. Particule multicouche selon la revendication 9, **caractérisée en ce que** le monomère photoactif est l'eAA ou l'eMMA de formules :

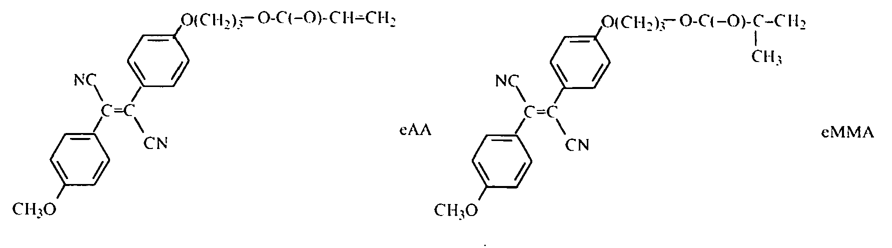

22. Particule multicouche selon l'une quelconque des revendications 1 à 21, **caractérisée en ce que** la couche B comprend un monomère copolymérisable avec le monomère photoactif et ayant une T_{g} < 0°C.

23. Particule multicouche selon l'une quelconque des revendications 1 à 22, **caractérisée en ce que** la couche B comprend un monomère à effet coopératif de formule (IX) : 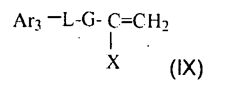 dans laquelle :
• X, G et L sont tels que définis à l'une des revendications 1, 10 à 11 ;
• Ar₃ désigne un groupe aromatique substitué par au moins un substituant à effet inducteur (-I).

24. Particule multicouche selon la revendication 23, **caractérisée en ce que** le substituant à effet inducteur (-I) est choisi parmi :
(i) les halogènes, de préférence le chlore ;
(ii) -COOY, -CONYY', -OY, -SY ou -C(=O)Y, Y et Y' désignant un groupe H ou alkyle linéaire ou ramifié en C₁-C_{10.}

25. Particule multicouche selon la revendication selon l'une des revendications 23 ou 24, **caractérisée en ce que** Ar₃ est un groupe phényle.

26. Particule multicouche selon la revendication 23, **caractérisée en ce que** le monomère à effet coopératif est choisi parmi :

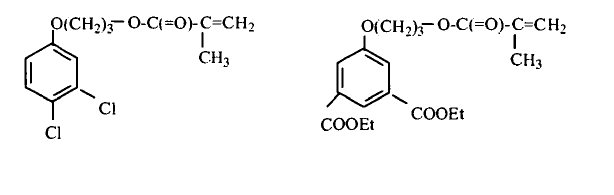

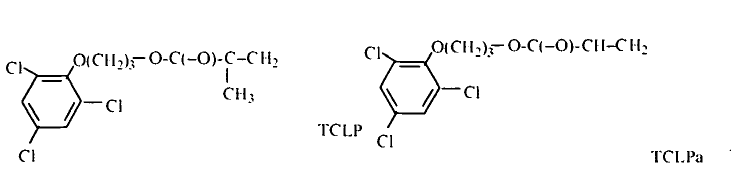

27. Mélange comprenant des particules multicouches telles que définies à l'une quelconque des revendications 1 à 26 et un polymère qui est un thermoplastique, un élastomère thermoplastique ou un thermodurcissable.

28. Mélange selon la revendication 27, comprenant en poids de 50 à 100%, avantageusement de 75 à 100%, de préférence de 90 à 100%, de particules multicouches pour respectivement de 0 à 50%, avantageusement de 0 à 25%, de préférence 5 à 10% du polymère thermoplastique ou de l'élastomère thermoplastique ou du thermodurcissable.

29. Mélange selon la revendication 27 ou 28, dans lequel le polymère thermoplastique est un homo- ou copolymère du méthacrylate de méthyle ou bien un polycarbonate.

30. Mémoire optique 3D comprenant des particules multicouches telles que définies à l'une quelconque des revendications 1 à 26 ou le mélange tel que défini à l'une quelconque des revendications 27 à 29.

31. Mémoire optique 3D selon la revendication 30, se présentant sous la forme d'une plaque, carrée ou rectangulaire, d'un cube ou bien d'un disque.

32. Utilisation des particules multicouches telles que définies à l'une quelconque des revendications 1 à 26 ou du mélange tel que défini à l'une quelconque des revendications 27 à 29 pour réaliser du stockage optique de données.

33. Utilisation des particules multicouches telles que définies à l'une quelconque des revendications 1 à 26 ou du mélange tel que défini à l'une quelconque des revendications 27 à 29 en tant que mémoire optique 3D.

## Claims

1. Core-shell type multilayer particle comprising at least one layer B comprising at least one photoactive monomer containing a photoisomerizable chromophore and a rigid shell A, the photoactive monomer having the formula (I): 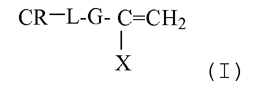 in which:
• X denotes H or CH₃-;
• G denotes -O-C(=O)-, -C(=O)-O-, a substituted or unsubstituted phenyl group, or else -NR-C(=O)-, NR being linked to L and R being H or a C₁-C₁₀ linear or branched alkyl group;
• L denotes a spacer group; and
• CR denotes a photoisomerizable chromophore.

2. Multilayer particle according to Claim 1, **characterized in that** the layer B constituting the core of the particle is placed against a rigid outer shell A.

3. Multilayer particle according to Claim 1 or 2, comprising, in addition to the layer B and the rigid shell A, one or more other layer(s).

4. Multilayer particle according to Claim 1, comprising, placed one against another (in the order from the inside towards the outside of the particle), an inner layer B (the core), an intermediate layer and a rigid outer shell.

5. Multilayer particle according to any one of Claims 1 to 4, **characterized in that** at least one of the layers is crosslinked.

6. Multilayer particle according to any one of Claims 1 to 5, **characterized in that** the rigid shell A consists of a polymer having a T_{g} > 0°C, advantageously > 60°C, preferably > 80°C.

7. Multilayer particle according to any one of Claims 1 to 6, **characterized in that** the rigid shell A comprises styrene and/or MMA as the main monomer(s).

8. Multilayer particle according to Claim 7, **characterized in that** the rigid shell A comprises from 80 to 100% of styrene and/or MMA.

9. Multilayer particle according to any one of Claims 1 to 8, **characterized in that** the layer B/shell A mass ratio preferably ranges from 90/10 to 10/90.

10. Multilayer particle according to one of the preceding claims, **characterized in that** the spacer group L is chosen so that G and CR are linked together by a chain of 2 atoms or more that are bonded together by covalent bonds.

11. Multilayer particle according to one of the preceding claims, **characterized in that** L is chosen from (CR₁R₂)ₘ, 0(CR₁R₂)ₘ and (OCR₁R₂)ₘ in which m is an integer higher than 2, preferably between 2 and 10, R₁ and R₂ independently denote H, halogen or a linear or branched alkyl group or an aryl group.

12. Multilayer particle according to one of Claims 1 to 11, **characterized in that** the chromophore CR is of diarylalkylene type.

13. Multilayer particle according to one of Claims 1 to 12, **characterized in that** the chromophore CR has an overlap < 35%, the spectra being recorded on a 0.01 M solution of the chromophone in a 1 cm optical path length cuvette.

14. Multilayer particle according to one of Claims 1 to 13, **characterized in that** the Stokes shift of the chromophone CR is greater than 100 nm.

15. Multilayer particle according to any one of Claims 1 to 14, **characterized in that** the photoactive monomer has the formula (II): 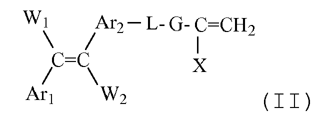 in which:
• Ar₁ and Ar₂ denote aryl groups that are possibly substituted; and
• W₁ and W₂ are chosen from the groups -CN, -COOH, -COOR' , -OH, -SO₂R' and -NO₂, R' being a C₁-C₁₀ linear or branched alkyl group or a C₁-C₁₀ aryl group.

16. Multilayer particle according to Claim 15, **characterized in that** Ar₁ and Ar₂ are chosen, independently of one another, from phenyl, anthracene or phenanthrene groups.

17. Multilayer particle according to Claim 14, **characterized in that** the photoactive monomer has the formula (III) or (IV) : 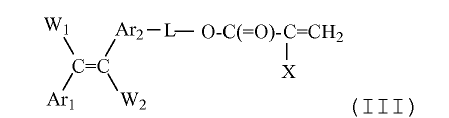 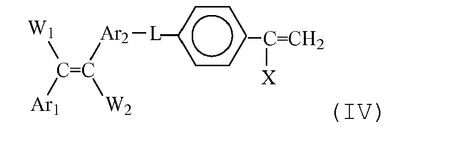 in which:
• Ar₁ and Ar₂ denote aryl groups that are possibly substituted; and
• W₁ and W₂ are chosen from the groups -CN, -COOH, -COOR', -OH, -SO₂R' and -NO₂, R' being a C₁-C₁₀ linear or branched alkyl group or a C₁-C₁₀ aryl group.

18. Multilayer particle according to any one of Claims 1 to 17, in which the chromophore is chosen from : 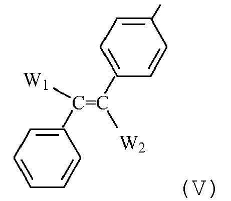 W₁ and W₂ being chosen from the groups -CN, -COOH, -COOR', -OH, -SO₂R' and -NO₂, R' being a C₁-C₁₀ linear or branched alkyl group or a C₁-C₁₀ aryl group and each of the two phenyl rings may possibly be substituted.

19. Multilayer particle according to one of Claims 15 to 18, **characterized in that** Ar₁ is a phenyl group and Ar₂ is a phenyl or biphenyl group, each of the phenyl and/or biphenyl groups able to be possibly substituted.

20. Multilayer particle according to Claim 19, **characterized in that** W₁ and W₂ denote CN, Ar₂ is a phenyl group, Ar₁ is a phenyl or biphenyl group substituted in the para position by R₅O-, R₅ denoting a substituted or unsubstituted, linear or branched alkyl group or a substituted or unsubstituted aryl group.

21. Multilayer particle according to Claim 9, **characterized in that** the photoactive monomer is eA or eMMA of formulae:

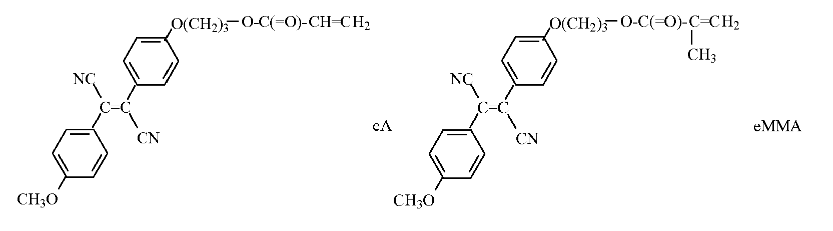

22. Multilayer particle according to any one of Claims 1 to 21, **characterized in that** the layer B comprises a monomer that can be copolymerized with the photoactive monomer having a Tg < 0°C.

23. Multilayer particle according to any one of Claims 1 to 22, **characterized in that** the layer B comprises a monomer having a cooperative effect of formula (IX): 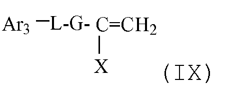 in which:
• X, G and L are as defined in one of Claims 1, 10 and 11; and
• Ar₃ denotes an aromatic group substituted by at least one substituent having an inductive effect (-I).

24. Multilayer particle according to Claim 23, **characterized in that** the substituent having an inductive effect (-1) is chosen from:
(i) halogens, preferably chlorine; and
(ii) -COOY, -CONYY', -OY, -SY or -C(=O)Y, Y and Y' denoting a H or C₁-C₁₀ linear or branched alkyl group.

25. Multilayer particle according to either of Claims 23 and 24, **characterized in that** Ar₃ is a phenyl group.

26. Multilayer particle according to Claim 23, **characterized in that** the monomer having a cooperative effect is chosen from:

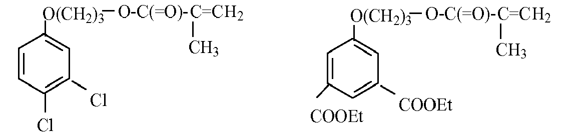

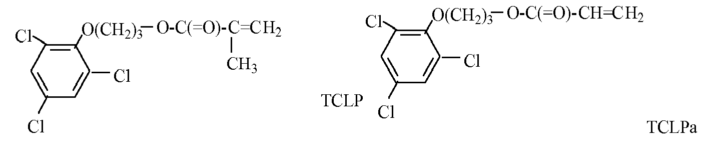

27. Blend comprising multilayer particles as defined in any one of Claims 1 to 26 and a thermoplastic, thermoplastic elastomer or thermosetting polymer.

28. Blend according to Claim 27, comprising 50 to 100 wt%, advantageously 75 to 100 wt%, preferably 90 to 100 wt%, of multilayer particles respectively per 0 to 50 wt%, advantageously 0 to 25 wt%, preferably 5 to 10 wt% of the thermoplastic, thermoplastic elastomer or thermosetting polymer.

29. Blend according to Claim 27 or 28, in which the thermoplastic polymer is a homo- or copolymer of methyl methacrylate or else a polycarbonate.

30. 3D optical memory device comprising multilayer particles as defined in any one of Claims 1 to 26 or the blend such as defined in any one of Claims 27 to 29.

31. 3D optical memory device according to Claim 30, being in the form of a square or rectangular plate, a cube or else a disk.

32. Use of multilayer particles as defined in any one of Claims 1 to 26 or of the blend as defined in any one of Claims 27 to 29 to carry out optical storage of data.

33. Use of multilayer particles as defined in any one of Claims 1 to 26 or of the blend as defined in any one of Claims 27 to 29 as a 3D optical memory.

## Patentansprüche

1. Mehrschichtiges Teilchen vom Kern-Schale-Typ mit mindestens einer Schicht B, die mindestens ein photoaktives Monomer mit einem photoisomerisierbaren Chromophor umfaßt, und einer harten Schale A, wobei das photoaktive Monomer die Formel (I) aufweist: 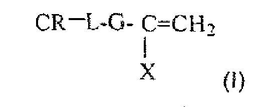 worin:
• X für H oder CH₃- steht;
• G für O-C(=O)-, -C(=O)-O-, eine gegebenenfalls substituierte Phenylgruppe oder -NR-C(=O)-steht, wobei NR an L gebunden ist und R H oder eine lineare oder verzweigte C₁-C₁₀-Alkylgruppe bedeutet;
• L für eine Spacergruppe steht;
• CR für ein photoisomerisierbares Chromophor steht.

2. Mehrschichtiges Teilchen nach Anspruch 1, **dadurch gekennzeichnet, daß** die Schicht B den Kern des Teilchens darstellt und an eine harte Außenschale A angrenzt.

3. Mehrschichtiges Teilchen nach Anspruch 1 oder 2, die neben der Schicht B und der harten Schale A eine oder mehrere weitere Schichten aufweist.

4. Mehrschichtiges Teilchen nach Anspruch 1, das (in der Reihenfolge vom Inneren zum Äußeren des Teilchens) eine Innenschicht B (den Kern), gegebenenfalls eine Zwischenschicht und eine harte Außenschale, die aneinander angrenzen, aufweist.

5. Mehrschichtiges Teilchen nach einem der Ansprüche 1 bis 4, **dadurch gekennzeichnet, daß** mindestens eine der Schichten vernetzt ist.

6. Mehrschichtiges Teilchen nach einem der Ansprüche 1 bis 5, **dadurch gekennzeichnet, daß** die harte Schale A aus einem Polymer mit einer T_{g} > 0°C, vorteilhafterweise > 60°C und vorzugsweise > 80°C besteht.

7. Mehrschichtiges Teilchen nach einem der Ansprüche 1 bis 6, **dadurch gekennzeichnet, daß** die harte Schale A als Hauptmonomer(e) Styrol und/oder MMA umfaßt.

8. Mehrschichtiges Teilchen nach Anspruch 7, **dadurch gekennzeichnet, daß** die harte Schale A 80 bis 100% Styrol und/oder MMA umfaßt.

9. Mehrschichtiges Teilchen nach einem der Ansprüche 1 bis 8, **dadurch gekennzeichnet, daß** das Massenverhältnis von Schicht B zu Schale A 90/10 bis 10/90 beträgt.

10. Mehrschichtiges Teilchen nach einem der vorhergehenden Ansprüche, **dadurch gekennzeichnet, daß** die Spacergruppe L so gewählt ist, daß G und CR über eine Kette von zwei oder mehr Atomen, die über kovalente Bindungen aneinander gebunden sind, miteinander verbunden sind.

11. Mehrschichtiges Teilchen nach einem der vorhergehenden Ansprüche, **dadurch gekennzeichnet, daß** L unter (CR₁R₂)ₘ, O(CR₁R₂)ₘ und (OCR₁R₂)ₘ, worin m für eine ganze Zahl größer 2 und vorzugsweise zwischen 2 und 10 steht und R₁ und R₂ unabhängig für H, Halogen oder lineare oder verzweigte Alkyl- oder Arylgruppen steht, ausgewählt ist.

12. Mehrschichtiges Teilchen nach einem der Ansprüche 1 bis 11, **dadurch gekennzeichnet, daß** das Chromophor CR vom Diarylalkylen-Typ ist.

13. Mehrschichtiges Teilchen nach einem der Ansprüche 1 bis 12, **dadurch gekennzeichnet, daß** das Chromophor CR eine Überlappung < 35% aufweist, wobei die Spektren an einer 0,01 M Lösung des Chromophors in einer Küvette mit einer optischen Weglänge von 1 cm gemessen werden.

14. Mehrschichtiges Teilchen nach einem der Ansprüche 1 bis 13, **dadurch gekennzeichnet, daß** die Stokes-Verschiebung des Chromophors CR größer als 100 nm ist.

15. Mehrschichtiges Teilchen nach einem der Ansprüche 1 bis 14, **dadurch gekennzeichnet, daß** das photoaktive Monomer die Formel (II) aufweist: 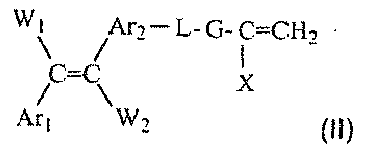 worin:
• Ar₁ und Ar₂ für gegebenenfalls substituierte Arylgruppen stehen;
• W₁ und W₂ unter -CN-, -COOH-, -COOR'-, -OH-, -S0₂R'- und -NO₂-Gruppen ausgewählt sind, wobei R' für eine lineare oder verzweigte C₁-C₁₀-Alkyl- oder -Arylgruppe steht.

16. Mehrschichtiges Teilchen nach Anspruch 15, **dadurch gekennzeichnet, daß** Ar₁ und Ar₂ unabhängig voneinander unter Phenyl-, Anthracen- oder Phenanthrengruppen ausgewählt sind.

17. Mehrschichtiges Teilchen nach Anspruch 14, **dadurch gekennzeichnet, daß** das photoaktive Monomer die Formel (III) oder (IV) aufweist: 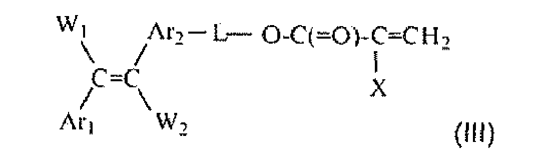 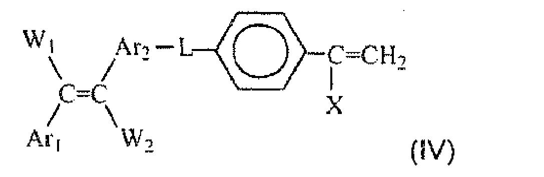 worin:
• Ar₁ und Ar₂ für gegebenenfalls substituierte Arylgruppen stehen;
• W₁ und W₂ unter -CN-, -COOH-, -COOR'-, -OH-, -SO₂R'- und -NO₂-Gruppen ausgewählt sind, wobei R' für eine lineare oder verzweigte C₁-C₁₀-Alkyl- oder -Arylgruppe steht.

18. Mehrschichtiges Teilchen nach einem der Ansprüche 1 bis 17, **dadurch gekennzeichnet, daß** das Chromophor unter: 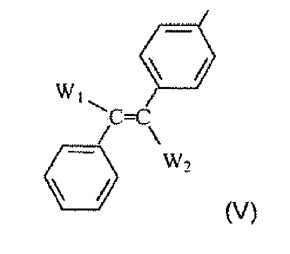 ausgewählt ist, wobei W₁ und W₂ unter -CN-, -COOH-, -COOR'-, -OH-, -SO₂R'- und -NO₂-Gruppen ausgewählt sind, wobei R' für eine lineare oder verzweigte C₁-C₁₀-Alkyl- oder -Arylgruppe steht und jeder der beiden Phenylringe gegebenenfalls substituiert sein kann.

19. Mehrschichtiges Teilchen nach einem der Ansprüche 15 bis 18, **dadurch gekennzeichnet, daß** Ar₁ für eine Phenylgruppe steht und Ar₂ für eine Phenyl- oder Biphenylgruppe steht, wobei die Phenyl- und/oder Biphenylgruppen jeweils gegebenenfalls substituiert sein können.

20. Mehrschichtiges Teilchen nach Anspruch 19, **dadurch gekennzeichnet, daß** W₁ und W₂ für CN stehen, Ar₂ für eine Phenylgruppe steht, Ar₁ für eine in paraStellung durch R₅O- substituierte Phenyl- oder Biphenylgruppe steht, wobei R₅ für eine gegebenenfalls substituierte lineare oder verzweigte Alkylgruppe steht.

21. Mehrschichtiges Teilchen nach Anspruch 9, **dadurch gekennzeichnet, daß** es sich bei dem photoaktiven Monomer um eAA oder eMMA der Formeln: 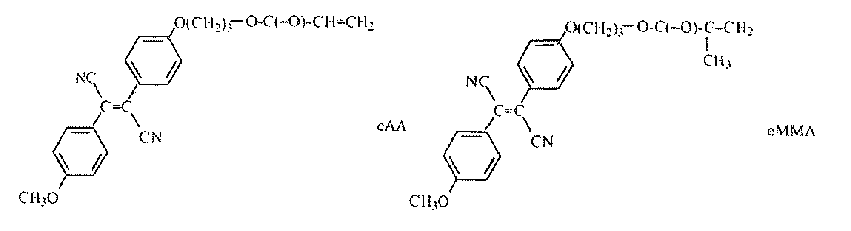 handelt.

22. Mehrschichtiges Teilchen nach einem der Ansprüche 1 bis 21, **dadurch gekennzeichnet, daß** die Schicht B ein mit dem photoaktiven Monomer mit einer T_{g} < 0°C copolymerisierbares Monomer umfaßt.

23. Mehrschichtiges Teilchen nach einem der Ansprüche 1 bis 22, **dadurch gekennzeichnet, daß** die Schicht B ein Monomer mit kooperativem Effekt der Formel (IX) umfaßt: 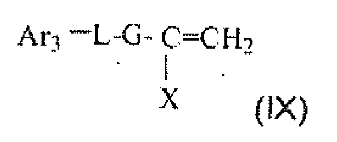 worin:
• X, G und L die in einem der Ansprüche 1, 10 bis 11 angegebene Bedeutung besitzen;
• Ar₃ für eine durch mindestens einen Substituenten mit induktivem Effekt (-I) substituierte aromatische Gruppe steht.

24. Mehrschichtiges Teilchen nach Anspruch 23, **dadurch gekennzeichnet, daß** der Substituent mit induktivem Effekt (-I) unter:
(i) Halogenen, vorzugsweise Chlor;
(ii) -COOY, -CONYY', -OY, -SY oder -C(=O)Y, wobei Y und Y' für eine H- oder lineare oder verzweigte C₁-C₁₀-Alkylgruppe stehen; ausgewählt ist.

25. Mehrschichtiges Teilchen nach einem der Ansprüche 23 oder 24, **dadurch gekennzeichnet, daß** Ar₃ für eine Phenylgruppe steht.

26. Mehrschichtiges Teilchen nach Anspruch 23, **dadurch gekennzeichnet, daß** das Monomer mit kooperativem Effekt unter: 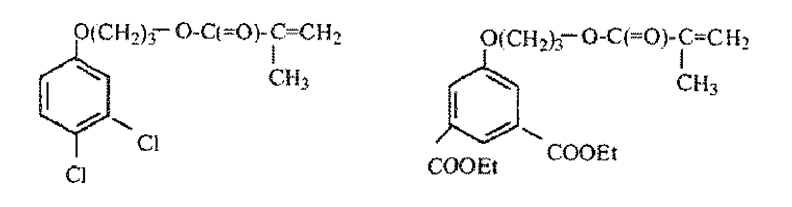 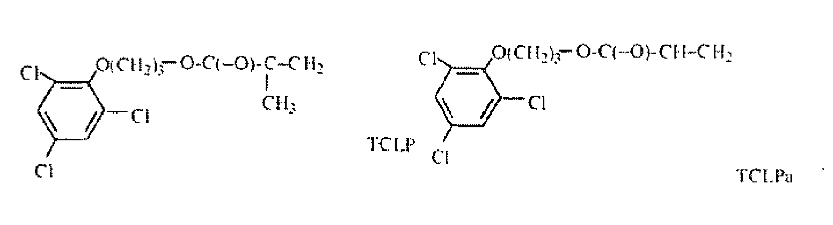 ausgewählt ist.

27. Mischung, enthaltend mehrschichtige Teilchen gemäß einem der Ansprüche 1 bis 26 und ein Polymer, bei dem es sich um einen Thermoplast, ein thermoplastisches Elastomer oder einen Duroplast handelt.

28. Mischung nach Anspruch 27, enthaltend 50 bis 100 Gew.-%, vorteilhafterweise 75 bis 100 Gew.-% und vorzugsweise 90 bis 100 Gew.-% mehrschichtige Teilchen auf respektive 0 bis 50 Gew.-%, vorteilhafterweise 0 bis 25 Gew.-% und vorzugsweise 5 bis 10 Gew.-% thermoplastisches Polymer, thermoplastisches Elastomer oder Duroplast.

29. Mischung nach Anspruch 27 oder 28, worin es sich bei dem thermoplastischen Polymer um ein Homo- oder Copolymer von Methylmethacrylat oder auch ein Polycarbonat handelt.

30. Optischer 3D-Speicher, umfassend mehrschichtige Teilchen gemäß einem der Ansprüche 1 bis 26 oder die Mischung gemäß einem der Ansprüche 27 bis 29.

31. Optischer 3D-Speicher nach Anspruch 30, der in Form einer quadratischen oder rechteckigen Platte, eines Würfels oder einer Scheibe vorliegt.

32. Verwendung von mehrschichtigen Teilchen gemäß einem der Ansprüche 1 bis 26 oder der Mischung gemäß einem der Ansprüche 27 bis 29 zur optischen Datenspeicherung.

33. Verwendung von mehrschichtigen Teilchen gemäß einem der Ansprüche 1 bis 26 oder der Mischung gemäß einem der Ansprüche 27 bis 29 als optischer 3D-Speicher.
